# EUROPEAN PATENT APPLICATION

(11) **EP 4 832 218 A1**
(43) Date of publication of application: **28.10.2026**
(21) Application number: 26169057.2
(22) Date of filing: 30.03.2026
(51) Int. Cl.: H01M 50/383, H01M 50/209, H01M 50/271

(54) **BATTERY MODULE**

(30) Priority: 08.04.2025 KR 20250045436
(71) Applicant: SAMSUNG SDI CO., LTD., Yongin-si, Gyeonggi-do 17084 (KR)
(72) Inventor: KANG, KYOUNGHOON, 17084 Yongin-si, Gyeonggi-do (KR); LEE, KWANGDEUK, 17084 Yongin-si, Gyeonggi-do (KR); YOON, JONGWOOK, 17084 Yongin-si, Gyeonggi-do (KR); YUN, JINBHUM, 17084 Yongin-si, Gyeonggi-do (KR); MOON, PILYONG, 17084 Yongin-si, Gyeonggi-do (KR); HONG, BEOMSEOK, 17084 Yongin-si, Gyeonggi-do (KR); SON, HEETAE, 17084 Yongin-si, Gyeonggi-do (KR)
(74) Representative: Meissner Bolte Partnerschaft mbB

(57) **Abstract**

A battery module (100) includes a plurality of battery cells (10), an upper cover (140) covering the plurality of battery cells (10) and a fire extinguishing unit (130) arranged between the upper cover (140) and the plurality of battery cells (10). The fire extinguishing unit (130) includes a first case (110, 610, 710) and a second case (120), which is combined with the first case (110, 610, 710) and accommodates a fire extinguishing medium (115, 615, 715) together with the first case (110, 610, 710). The first case (110, 610, 710) includes a plurality of openings penetrating the first case (110, 610, 710) in a thickness direction of the first case (110, 610, 710) and a cover part (111, 611, 711) positioned within each of the plurality of openings to block each of the plurality of openings. A coating layer (113, 613, 713) is positioned on a bottom surface of the first case (110, 610, 710), covers the plurality of openings, and includes an ignition agent, an oxidizing agent, and a resin.

## Description

### FIELD

The present invention relates to a battery module.

### BACKGROUND

Unlike primary batteries that cannot be recharged, secondary batteries may be charged and discharged. Low-capacity secondary batteries are used in small, portable electronic devices, such as smartphones, feature phones, laptop computers, digital cameras, and camcorders, while large-capacity secondary batteries are widely used as power storage batteries and power sources for driving motors of hybrid cars, electric cars, etc. These secondary batteries include an electrode assembly including a positive electrode and a negative electrode, a case accommodating the electrode assembly, and an electrode terminal connected to the electrode assembly.

The herein-described information disclosed in the background technology of this invention is only intended to improve understanding of the background of the present invention and therefore may include information that does not constitute prior art.

### SUMMARY OF THE INVENTION

The present invention provides a battery module having improved stability.

However, the technical problems to be solved by the present invention are not limited to these described herein, and other problems that have not been mentioned will be clearly understood by those skilled in the art from the description of the invention described herein.

The present invention discloses a battery module including a plurality of battery cells, an upper cover covering the plurality of battery cells, and a fire extinguishing unit arranged between the upper cover and the plurality of battery cells, wherein the fire extinguishing unit includes a first case and a second case, which is combined with the first case and accommodates a fire extinguishing medium together with the first case, the first case includes a plurality of openings penetrating the first case in a thickness direction of the first case and a cover part positioned within each of the plurality of openings to block each of the plurality of openings, and a coating layer is positioned on a bottom surface of the first case, covers the plurality of openings, and includes an ignition agent, an oxidizing agent, and a resin.

In embodiments, each of the plurality of battery cells may include a vent, and each of the plurality of openings may overlap the vent.

In embodiments, a thickness of the cover part may be about 0.1 mm to about 2 mm.

In embodiments, a shape of each of the plurality of openings may be a circle.

In embodiments, a diameter of each of the plurality of openings may be about 5 mm to about 100 mm.

In embodiments, the coating layer may include about 50 wt% to about 70 wt% of the resin, about 5 wt% to about 20 wt% of the ignition agent, and about 20 wt% to about 40 wt% of the oxidizing agent.

In embodiments, a thickness of the cover part may be less than a thickness of the first case.

In embodiments, the first case may further include a fastening protrusion protruding toward the cover part in each of the plurality of openings, and the cover part may include a fastening groove corresponding to the fastening protrusion.

In embodiments, the first case may further include a support portion obliquely protruding in each of the plurality of openings toward a center of each of the plurality of openings, and the cover part may be positioned on the support portion.

In embodiments, the oxidizing agent may include at least one of potassium nitrate (KNO₃), sodium nitrate (NaNO₃), ammonium nitrate (NH₄NO₃), potassium perchlorate (KClO₄), sodium perchlorate (NaClO₄), ammonium perchlorate (NH₄ClO₄), and potassium permanganate (KMnO₄).

The present invention discloses a battery module including a plurality of battery cells each including a vent and a fire extinguishing unit arranged on the plurality of battery cells, wherein the fire extinguishing unit includes a first case and a second case, which is combined with the first case and accommodates a fire extinguishing medium together with the first case, the first case includes a plurality of openings penetrating the first case in a thickness direction of the first case and a cover part positioned within each of the plurality of openings to block each of the plurality of openings, a coating layer is positioned on a bottom surface of the first case, covers the plurality of openings, and includes an ignition agent, an oxidizing agent, and a resin, and each of the plurality of openings overlaps the vent.

In embodiments, the coating layer may include about 50 wt% to about 70 wt% of the resin, about 5 wt% to about 20 wt% of the ignition agent, and about 20 wt% to about 40 wt% of the oxidizing agent.

In embodiments, a thickness of the cover part may be less than a thickness of the first case.

In embodiments, a thickness of the cover part may be about 0.1 mm to about 2 mm.

In embodiments, an area of the coating layer may be larger than an area of the plurality of openings.

In embodiments, a diameter of each of the plurality of openings may be about 5 mm to about 100 mm.

In embodiments, the first case may further include a fastening protrusion protruding toward the cover part in each of the plurality of openings, and the cover part may include a fastening groove corresponding to the fastening protrusion.

In embodiments, the first case may further include a support portion obliquely protruding in each of the plurality of openings toward a center of each of the plurality of openings, and the cover part may be positioned on the support portion.

In embodiments, the oxidizing agent may include at least one of potassium nitrate (KNO₃), sodium nitrate (NaNO₃), ammonium nitrate (NH₄NO₃), potassium perchlorate (KClO₄), sodium perchlorate (NaClO₄), ammonium perchlorate (NH₄ClO₄), and potassium permanganate (KMnO₄).

In embodiments, the ignition agent may include at least one of nitrocellulose (NC), red phosphorus, sulfur, charcoal, antimony trisulfide (Sb₂S₃), potassium chlorate (KClO₃), barium chlorate (Ba(ClO₃)₂), and titanium.

### BRIEF DESCRIPTION OF THE DRAWINGS

The following drawings attached to this specification illustrate preferred embodiments of the present invention and, together with the detailed description of the invention herein, serve for further understanding of the technical idea of the present invention. Therefore, the present invention should not be interpreted as being limited to the drawings in which:
FIG. 1 is an exploded perspective view schematically illustrating an example of a battery module according to the present invention;
FIG. 2 is a perspective view schematically illustrating an example of a battery cell of the battery module of FIG. 1;
FIG. 3 is a cross-sectional view schematically illustrating an example of a cross-section along line B-B in FIG. 2;
FIG. 4 is a cross-sectional view schematically illustrating an example of a cross-section along line A-A of a fire extinguishing unit in FIG. 1;
FIG. 5 is a plan view schematically illustrating an example of a first case of the fire extinguishing unit in FIG. 1;
FIG. 6 is a cross-sectional view schematically illustrating another example of the cross-section along line A-A of the fire extinguishing unit in FIG. 1;
FIG. 7 is a cross-sectional view schematically illustrating another example of the cross-section along line A-A of the fire extinguishing unit in FIG. 1.

### DETAILED DESCRIPTION

Hereinafter, preferred embodiments of the present invention will be described in detail with reference to the accompanying drawings. Terms or words used in this specification and the appended claims should not be interpreted as limited to their usual or dictionary meanings and should be interpreted as meanings and concepts that conform to the technical idea of the present invention, based on the principle that the inventor can appropriately define the concepts of the terms in order to explain his or her own invention in the best way. Therefore, the embodiments described in this specification and the configurations illustrated in the drawings are only some of the most preferred embodiments of the present invention and do not represent all of the technical ideas of the present invention, and it should be understood that there may be various equivalents and modified examples that can replace them at the time of this application.

The term "comprise (or include)" and/or "comprising (or including)" specifies the presence of a feature, a figure, a step, an operation, a component, an element, and/or a group thereof but do not preclude the presence or addition of one or more other features, figures, operations, components, elements and/or groups thereof.

To help with understanding of the invention, the accompanying drawings are not drawn at an actual scale, and the dimensions of some components may be exaggerated. In different embodiments, like reference numerals may denote like elements.

Although the terms first, second, etc. may be used herein to describe various elements, these elements should not be limited by these terms. These terms are used only to distinguish one element from another. Unless specifically stated otherwise, it is to be understood that a first element may also be a second element.

Throughout the specification, unless specifically stated otherwise, each element may be singular or plural.

An element being placed "on (or below)" or "on the top of (or on the bottom of)" another element may mean not only that an element is in contact with the top surface (or the bottom surface) of another element but also that there may be other elements between an element and another element on the top (or on the bottom) of the element.

It is to be understood that when an element is described as being "connected to," "combined with," or "coupled to" another element, it may be directly connected or coupled the other element, there may be intervening elements between two elements, or two elements may "connected to," "combined with," or "coupled to" each other through other elements. When a portion is referred to as being electrically coupled to another portion, it may be directly coupled to the other portion or may be coupled to the other portion with an intervening element therebetween.

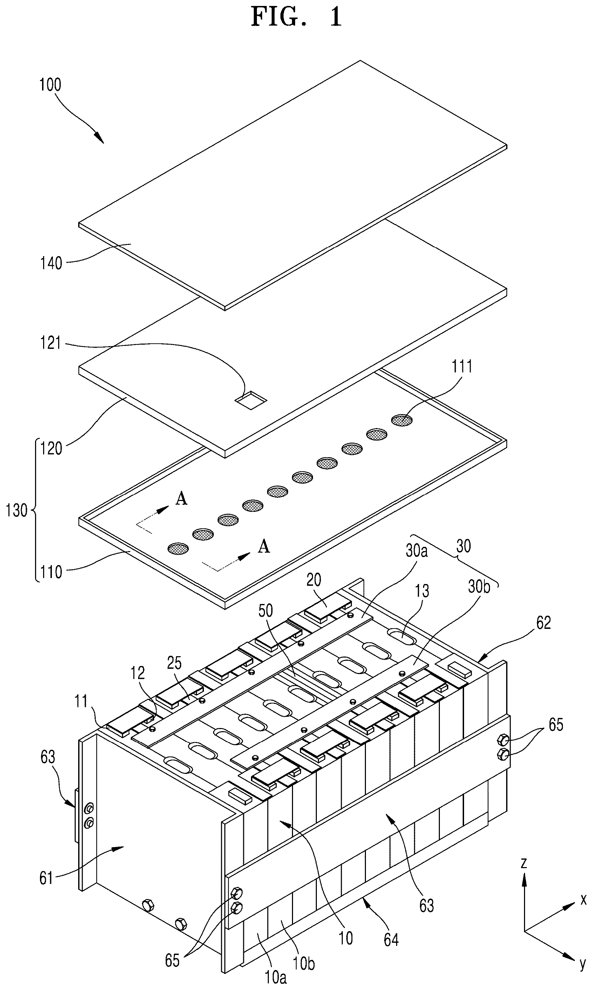

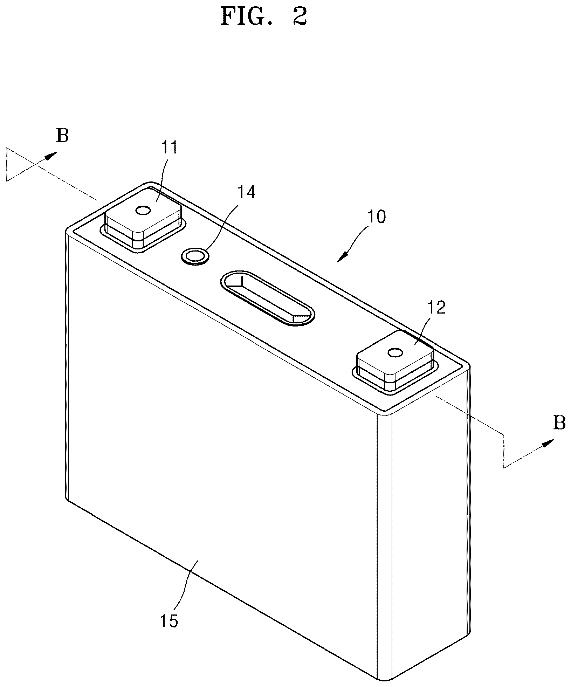

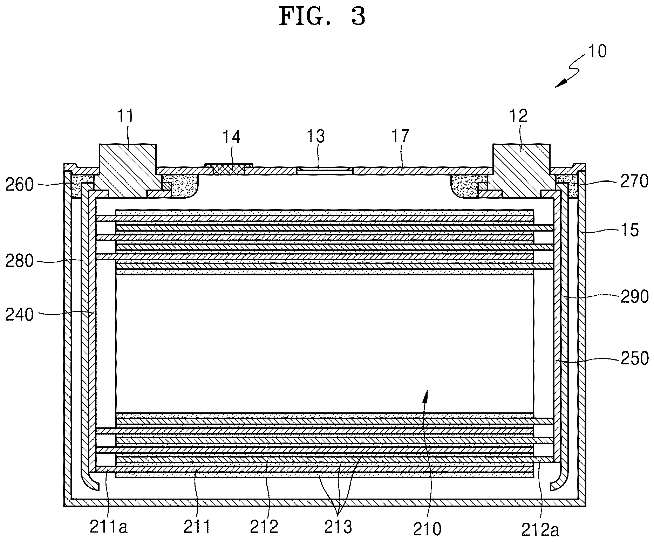

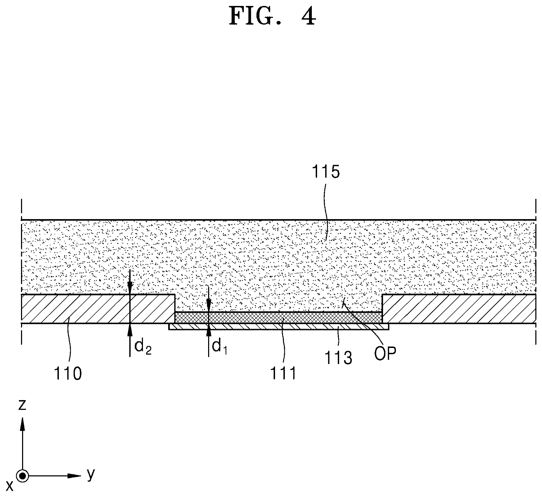

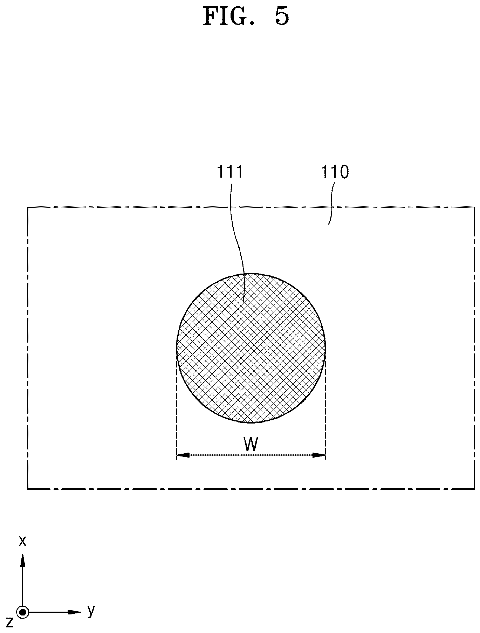

FIG. 1 is an exploded perspective view schematically illustrating an example of a battery module according to embodiments of the present invention. FIG. 2 is a perspective view schematically illustrating an example of a battery cell of the battery module of FIG. 1. FIG. 3 is a cross-sectional view schematically illustrating an example of a cross-section along line B-B in FIG. 2. FIG. 4 is a cross-sectional view schematically illustrating an example of a cross-section along line A-A of a fire extinguishing unit in FIG. 1. FIG. 5 is a plan view schematically illustrating an example of a first case of the fire extinguishing unit in FIG. 1.

Referring to FIGS. 1 to 3, according to embodiments of the present invention, a battery module 100 may include a plurality of battery cells 10, which are arranged in one direction (e.g., the x-direction) and each has a terminal part including a first terminal 11 and a second terminal 12, a connection tab 20 connecting one battery cell 10a to another battery cell 10b adjacent to the battery cell 10a, and a protection circuit module 30. The connection tab 20 and the protection circuit module 30 may be connected by a connection part 25. The connection tab 20 may include a metal material having satisfactory electrical conductivity, and the connection part 25 may include the same material as the connection tab 20.

The protection circuit module 30 may be, for example, a battery management system (BMS). The connection tab 20 may be in contact with the terminal part (11 and 12) between adjacent battery cells (e.g., 10a and 10b). The connection tab 20 may be, for example, a bus bar.

Each of the battery cells 10 may be including a battery case 15, an electrode assembly 210 housed within the battery case 15, and an electrolyte. The electrode assembly 210 and the electrolyte may electrochemically react with each other to generate energy. The terminal part (11 and 12), which is electrically connected to the connection tab 20, and a vent 13, which is a passage for discharging gas generated internally, may be provided in one side of each battery cell 10. The terminal part (11 and 12) of the battery cell 10 may include the first terminal 11 and the second terminal 12, which respectively have different polarities. For example, when the first terminal 11 is a positive terminal, the second terminal 12 may be a negative terminal. Conversely, when the first terminal 11 is a negative terminal, the second terminal 12 may be a positive terminal. That is, the first terminal 11 and the second terminal 12 may be formed to have different electrical polarities and are not limited to a specific polarity.

The terminal part (11 and 12) of adjacent battery cells 10 may be electrically connected in series and/or in parallel by the connection tab 20. For example, the first terminal 11 of one battery cell 10 may be electrically connected to the second terminal 12 of another adjacent battery cell 10 through the connection tab 20, and the second terminal 12 of one battery cell 10 may be electrically connected to the first terminal 11 of another adjacent battery cell 10 through another connection tab 20.

Although FIG. 1 illustrates a serial connection as an example, embodiments are not limited to this structure, and various connection structures may be adopted according to needs. The number and arrangement of battery cells are not limited to the structure illustrated in FIG. 1 and may be changed when necessary.

The plurality of battery cells 10 may be arranged in one direction (e.g., the x-direction) so that the respective wide surfaces of the battery cells 10 face each other. The battery cells 10 may be together accommodated in a housing (e.g., 61, 62, 63, and 64).

The housing (61, 62, 63, and 64) may include a pair of end plates 61 and 62 respectively facing the wide surfaces of a battery cell 10, a side plate 63 connecting the pair of end plates 61 and 62 to each other, and a bottom plate 64.

The side plate 63 may support a side surface of the battery cell 10, and the bottom plate 64 may support the bottom surface of the battery cell 10. The pair of end plates 61 and 62, the side plate 63, and the bottom plate 64 may be connected to each other by a member such as a bolt 65. However, embodiments are not limited thereto. The pair of end plates 61 and 62, the side plate 63, and the bottom plate 64 may be connected to each other in any fastening manner.

The protection circuit module 30 may have mounted therein electronic components and protection circuits and may be electrically connected to the connection tab 20 described herein.

The protection circuit module 30 may include a first protection circuit module 30a and a second protection circuit module 30b, which extend from different positions in the direction (the x-direction) in which the plurality of battery cells 10 are arranged. At this time, the first protection circuit module 30a and the second protection circuit module 30b may be parallel with each other and spaced apart from each other by a certain distance and may each be electrically connected to the connection tab 20 adjacent thereto.

For example, the first protection circuit module 30a may be formed to extend in one direction (the x-direction), in which the battery cells 10 are arranged, on one side of the top of the battery cells 10, and the second protection circuit module 30b may be formed to extend in one direction (the x-direction), in which the battery cells 10 are arranged, on the opposite side of the top of the battery cells 10. The second protection circuit module 30b may be spaced apart from the first protection circuit module 30a by a certain distance with the vent 13 therebetween and may be parallel with the first protection circuit module 30a.

In this way, two protection circuit modules (i.e., 30a and 30b) may be arranged in one direction (the x-direction), in which a plurality of battery cells are arranged, to be parallel with and spaced apart from each other, thereby minimizing the area of a printed circuit board (PCB) constituting the protection circuit module 30. Unnecessary protection circuit module area may be minimized by configuring the protection circuit module 30 with two separate protection circuit modules (i.e., 30a and 30b).

The first protection circuit module 30a and the second protection circuit module 30b may be connected to each other by a connection member 50 that is conductive. At this time, one side of the connection member 50 may be connected to the first protection circuit module 30a, and the opposite side of the connection member 50 may be connected to the second protection circuit module 30b so that an electrical connection may be formed between the two protection circuit modules (i.e., 30a and 30b).

The connection may be implemented by any one of soldering, resistance welding, laser welding, and projection welding.

The connection member 50 may include a material having elasticity or flexibility. The voltage, temperature, and current of the battery cells 10 may be checked and managed by the connection member 50 to be ensured to be normal.

That is, information, such as voltage, current, and temperature, received by the first protection circuit module 30a from a connection tab 20 adjacent to the first protection circuit module 30a and information, such as voltage, current, and temperature, received by the second protection circuit module 30b from a connection tab 20 adjacent to the second protection circuit module 30b may be integrated and managed by the protection circuit module 30 through the connection member 50.

In addition, when a battery cell 10 swells, the shock may be absorbed by the connection member 50 due to the elasticity or flexibility of the connection member 50, thereby preventing the first and second protection circuit modules 30a and 30b from being damaged.

The shape and structure of the connection member 50 may not be limited to the shape shown in FIG. 1.

As described herein, when the protection circuit module 30 is including the first and second protection circuit modules 30a and 30b, the area of a PCB constituting the protection circuit module 30 may be minimized so that an internal space of the battery module 100 may be secured. This may improve work efficiency by facilitating the fastening work of connecting the connection tab 20 to the protection circuit module 30 and facilitating repairs when an abnormality is detected in the battery module 100. According to embodiments, the battery cell 10 may include at least one electrode assembly 210 and the battery case 15 in which the electrode assembly 210 is embedded. The electrode assembly 210 may be wound with a positive electrode 211 and a negative electrode 212 with a separator 213, which is an insulator, between the positive electrode 211 and the negative electrode 212.

According to embodiments, the battery cell 10 may be described as having an angular shape as an example. However, the present invention is not limited thereto, and the present invention may also be applied to various types of battery cells, such as pouch battery cells and cylindrical battery cells.

The positive electrode 211 and the negative electrode 212 may each include a coated portion, which is an area where an active material is applied to a current collector formed of a metal foil of a thin plate, and a non-coated portion (e.g., 211a or 212a), which is an area where the current collector is not coated with the active material.

For example, the active material applied to the positive electrode 211 may include at least one of lithium cobalt oxide, lithium iron phosphate, lithium nickel manganese cobalt oxide, and lithium nickel cobalt aluminum oxide.

For example, the active material applied to the negative electrode 212 may include, but not limited to, at least one of graphite, silicon, and lithium titanium oxide.

The positive electrode 211 and the negative electrode 212 may be wound with the separator 213, which is an insulator, therebetween. However, the present invention is not limited thereto, and the electrode assembly 210 described herein may be formed in a structure in which a positive electrode and a negative electrode, which are made of a plurality of sheets, are alternately stacked with a separator therebetween.

The battery case 15 may form the overall appearance of the battery cell 10 and may include a conductive metal, such as aluminum, an aluminum alloy, or nickel-plated steel.

The battery case 15 may provide a space in which the electrode assembly 210 is accommodated.

The battery cell 10 may include a cap plate 17 covering an opening of the battery case 15. The battery case 15 and the cap plate 17 may include a conductive material. Here, the first terminal 11 and the second terminal 12 each electrically connected to the positive electrode 211 or the negative electrode 212 may penetrate the cap plate 17 and protrude outwards.

The outer circumferential surface of an upper pillar of each of the first terminal 11 and the second terminal 12, which protrude outwards from the cap plate 17, may be threaded and fixed to the cap plate 17 with a nut.

However, the present invention is not limited thereto, and the first terminal 11 and the second terminal 12 may have a rivet structure and thus be riveted to the cap plate 17 or may be welded to the cap plate 17.

The cap plate 17 may be formed as a thin plate and may be joined to the opening of the battery case 15. An electrolyte inlet 14, in which a sealing plug may be put, may be formed in the cap plate 17, and the vent 13 having a notch may be installed in the cap plate 17. The first terminal 11 and the second terminal 12 may be electrically connected to a current collector, which includes first and second current collectors 240 and 250 (hereinafter, referred to as positive and negative current collectors 240 and 250) respectively welded to a positive non-coated portion 211a and a negative non-coated portion 212a.

For example, the first terminal 11 and the second terminal 12 may be respectively joined to the positive and negative current collectors 240 and 250 by welding. However, the present invention is not limited thereto, and the first terminal 11 and the second terminal 12 may be integrally formed with the positive and negative current collectors 240 and 250, respectively.

An insulating member may be arranged between the electrode assembly 210 and the cap plate 17. Here, the insulating member may include first and second lower insulating members 260 and 270. Each of the first and second lower insulating members 260 and 270 may be arranged between the electrode assembly 210 and the cap plate 17.

According to the present embodiment, an end of a separating member, which may be arranged facing a side of the electrode assembly 210, may be arranged between the insulating member and each of the first terminal 11 and the second terminal 12.

Here, the separating member may include first and second separating members 280 and 290.

Accordingly, an end of the first separating member 280 that may face one side of the electrode assembly 210 may be arranged between the first lower insulating member 260 and the first terminal 11, and an end of the second separating member 290 that may face one side of the electrode assembly 210 may be arranged between the second lower insulating member 270 and the second terminal 12.

Consequently, the first terminal 11 and the second terminal 12 respectively welded to the positive and negative current collectors 240 and 250 may be connected to one ends of the first and second lower insulating members 260 and 270, respectively, and one ends of the first and second separating members 280 and 290, respectively.

Referring to FIGS. 1, 4, and 5, the battery module 100 may further include an upper cover 140 covering the top surfaces of the plurality of battery cells 10 and a fire extinguishing unit 130 arranged between the battery cells 10 and the upper cover 140.

The upper cover 140 may be joined to the housing (61, 62, 63, and 64) by using a fastening member such as a bolt but is not limited thereto, and any fastening method may be used. The upper cover 140 may be combined with the housing (61, 62, 63, and 64) to form an internal space, and the battery cells 10 and the fire extinguishing unit 130 may be accommodated in the internal space. Therefore, the upper cover 140 and the housing (61, 62, 63, and 64) may include a material that may protect the battery cells 10 and the fire extinguishing unit 130 from mechanical shock or thermal shock.

Accordingly, the material of the upper cover 140 and the housing (61, 62, 63, and 64) may include, but not limited to, a durable and heat-resistant material, e.g., at least one of acrylonitrile butadiene styrene (ABS), polycarbonate (PC), polypropylene (PP), aluminum, and stainless steel.

The fire extinguishing unit 130 may include a first case 110 and a second case 120 that is combined with the first case 110 to accommodate a fire extinguishing medium 115 together with the first case 110. For example, the first case 110 may be arranged at the bottom of the fire extinguishing unit 130 and on the side of the battery cells 10, and the second case 120 may be arranged at the top of the fire extinguishing unit 130. In this case, the fire extinguishing medium 115 may be injected into the fire extinguishing unit 130 through an injection hole 121 in the second case 120.

The fire extinguishing unit 130 may release the fire extinguishing medium 115 stored therein toward the battery cells 10 at a certain temperature or above. For example, the fire extinguishing medium 115 may include halogenated carbon that absorbs heat via latent heat of vaporization to cool the battery cells 10. Alternatively, the fire extinguishing medium 115 may include, but not limited to, a suffocating agent, such as a solid aerosol, which blocks oxygen and extinguishes fire.

The first case 110 may include a plurality of openings OP, which penetrate the first case 110 in a thickness direction (e.g., the z-direction) of the first case 110, and a cover part 111 positioned in each of the openings OP to block each opening OP. The openings OP may be arranged to respectively overlap respective vents 13 of the battery cells 10. Despite the openings OP of the first case 110, the fire extinguishing medium 115 may be well accommodated in the fire extinguishing unit 130 without a leak by the cover part 111 within the normal operating temperature range of the battery module 100. A mechanism by which the fire extinguishing medium 115 extinguishes fire in the battery module 100 is described herein.

In this specification, the "normal operating temperature range of the battery module 100" may refer to a temperature range in which the battery module 100 may stably supply power. When the battery module 100 is outside the normal operating temperature range, the performance or the lifespan of the battery module 100 may decrease or a stability problem may occur. For example, the normal operating temperature range of the battery module 100 may be, but not limited to, about -20 °C to about 60 °C. A temperature range, in which no performance degradation, shortened lifespan, or stability problems of the battery module 100 occur, may be the normal operating temperature range of the battery module 100.

An active material applied to the positive electrode of a battery cell 10 may include an olivine structure. Here, an olivine structure may include orthorhombic lithium-transition metal-phosphate. For example, the active material, which includes an olivine structure and is applied to the positive electrode of the battery cell 10, may include at least one of lithium iron phosphate (LiFePO₄), lithium manganese phosphate (LiMnPO₄), lithium cobalt phosphate (LiCoPO₄), and lithium nickel phosphate (LiNiPO₄).

When the active material applied to the positive electrode of the battery cell 10 includes an olivine structure, the thermal stability of the battery cell 10 may be excellent due to the strong covalent bond between phosphorus (P) and oxygen (O) of a phosphate. Accordingly, the thermal runaway behavior of a battery cell including nickel-cobalt-manganese or nickel-cobalt-aluminum, each being an oxide-based positive electrode material, may be different from the thermal runaway behavior of the battery cell 10 including an olivine structure in the positive electrode material.

For example, in the case where the positive electrode material of the battery cell 10 includes an olivine structure, even when the battery cell 10 is exposed to a high temperature, a chemical reaction progresses relatively slowly rather than rapidly causing a fire, due to high thermal stability. Accordingly, when the battery cell 10 is exposed to a high temperature, instead of catching fire rapidly, flammable gas may slowly accumulate inside the battery module 100, and pressure inside the battery module 100 may increase. For example, the flammable gas may be generated by decomposition of an electrolyte inside the battery cell 10 when the battery cell 10 is overcharged or thermally stressed. When flammable gas accumulates in the battery module 100 to a certain level or above, a fire may occur with a flame as the flammable gas accumulated in the battery module 100 is explosively released.

That is, when the battery cell 10 includes a positive electrode material including an olivine structure, there is a risk that the battery cell 10 explodes at once after flammable gas accumulates rather than causing a sudden fire. In the case of the battery cell 10 including a positive electrode material including this olivine structure, it may be necessary to release the fire extinguishing medium 115 inside the fire extinguishing unit 130 in advance of the thermal runaway of the battery cell 10 or the battery module 100 through ignition of a coating layer 113 located below the cover part 111, thereby lowering the temperature of the battery cell 10 or the battery module 100 or extinguishing fire in the battery cell 10 or the battery module 100 and removing flammable gas. This will be described in detail herein.

The coating layer 113 covering an opening OP may be positioned on the bottom surface of the first case 110. The coating layer 113 may include an ignition agent, an oxidizing agent, and resin that is solidified after the ignition agent and the oxidizing agent are dispersed. For example, the coating layer 113 may include about 50 wt% to about 70 wt% of the resin, about 5 wt% to about 20 wt% of the ignition agent, and about 20 wt% to about 40 wt% of the oxidizing agent.

There may be a plurality of coating layers 113 on the bottom surface of the first case 110 to respectively cover the openings OP. At this time, the area of a coating layer 113 may be larger than the area of an opening OP. When the area of the coating layer 113 is larger than the area of the opening OP, the cover part 111 arranged on the coating layer 113 may be appropriately melted, as described herein. When the area of the coating layer 113 is smaller than the area of the opening OP, heat may be not applied to the whole of the cover part 111 arranged on the coating layer 113 but rather be concentrated in a region in which the cover part 111 overlaps the coating layer 113 so that the cover part 111 does not melt as much as desired, which may delay the extinguishment of fire in the battery module 100.

For example, the coating layer 113 may be formed wide so as to integrally cover the plurality of openings OP.

In embodiments, the resin of the coating layer 113 may include thermosetting resin that hardens after coating. For example, the resin may include epoxy. Before the resin is solidified, the ignition agent and the oxidizing agent may be dispersed in the resin, and a coating solution containing the resin, in which the ignition agent and the oxidizing agent are dispersed, may be coated on the bottom of the first case 110. Thereafter, the coating solution may be solidified on the bottom of the first case 110 to form the coating layer 113. In such a case, the coating layer 113 may include about 50 wt% to about 70 wt% of the resin, about 5 wt% to about 20 wt% of the ignition agent, and about 20 wt% to about 40 wt% of the oxidizing agent.

In embodiments, when the resin in the coating layer 113 is less than 50 wt%, the ignition agent and the oxidizing agent may not be well dispersed in the resin of the coating solution. When the resin in the coating layer 113 exceeds 70 wt%, the ratio of the ignition agent and the oxidizing agent may be low so that the effects described herein may not be fully accomplished.

For example, the ignition agent in the coating layer 113 may include at least one of nitrocellulose (NC), red phosphorus, sulfur, charcoal, antimony trisulfide (Sb₂S₃), potassium chlorate (KClO₃), barium chlorate (Ba(ClO₃)₂), and titanium.

As described herein, the ignition temperature of the ignition agent may be lower than the thermal runaway temperature of the battery module 100 and higher than the normal operating temperature of the battery module 100. For example, when the ignition agent includes nitrocellulose, the thermal reaction temperature of the ignition agent may be about 160 °C to about 170 °C. As described herein, the normal operating temperature range of the battery module 100 may be about -20 °C to about 60 °C. Accordingly, since the normal operating temperature range of the battery module 100 is lower than the thermal reaction temperature of the ignition agent, there may be no concern about a fire caused by ignition of the ignition agent in the normal operating temperature range of the battery module 100 in which there is no event such as thermal runaway of the battery module 100.

When the active material applied to the positive electrode of the battery cell 10 includes an olivine structure, as described herein, the thermal stability is excellent so that the thermal runaway occurrence temperature of the battery module 100 including the battery cell 10 may be higher than the thermal reaction temperature of the ignition agent. Accordingly, by igniting the ignition agent and melting the cover part 111 before thermal runaway of the battery cell 10 or the battery module 100, the fire extinguishing medium 115 in the fire extinguishing unit 130 may be released into the battery cell 10 through an opening OP, thereby lowering the temperature of the battery cell 10 or the battery module 100 or extinguishing fire in the battery cell 10 or the battery module 100.

When the ignition agent in the coating layer 113 is less than 5 wt%, it may take a long time for the cover part 111 to melt due to ignition of the ignition agent, so there is a concern that the operation of the fire extinguishing unit 130 may not meet the desired operation time. In addition, when the ignition agent in the coating layer 113 exceeds 20 wt%, since the coating layer 113 includes a large amount of ignition agent, the ratio of the oxidizing agent that provides oxygen during combustion may accordingly decrease, so there is a concern that the amount of combustion may not be sufficient to melt the cover part 111. The oxidizing agent may help ignite the ignition agent by providing oxygen during combustion. In addition, the oxidizing agent may react with the flammable gas described herein before and after ignition of the ignition agent, thereby removing the flammable gas accumulated in the battery module 100. For example, the oxidizing agent may include at least one of potassium nitrate (KNO₃), sodium nitrate (NaNO₃), ammonium nitrate (NH₄NO₃), potassium perchlorate (KClO₄), sodium perchlorate (NaClO₄), ammonium perchlorate (NH₄ClO₄), and potassium permanganate (KMnO₄).

When the oxidizing agent in the coating layer 113 is less than 20 wt%, the amount of combustion may not be sufficient to melt the cover part 111 When the oxidizing agent in the coating layer 113 exceeds 40 wt%, since the coating layer 113 includes a large amount of oxidizing agent, the ratio of the ignition agent that ignites the coating layer 113 may accordingly decrease, so it may take a long time for the cover part 111 to melt due to the ignition of the ignition agent, and therefore, the operation of the fire extinguishing unit 130 may not meet the desired operation time.

That is, according to embodiments of the present invention, when the temperature of the battery cell 10 increases, the ignition agent of the coating layer 113 may ignite in advance so as to melt the cover part 111 of the first case 110 before thermal runaway occurs in the battery cell 10. Accordingly, the fire extinguishing medium 115 stored inside the fire extinguishing unit 130 may be sprayed toward the battery cell 10 through the opening OP, thereby lowering the temperature of the battery cell 10 or extinguish fire in the battery cell 10.

The oxidizing agent in the coating layer 113 may receive thermal energy from the increased temperature of the battery cell 10 and react with flammable gas, thereby exhausting the flammable gas. As a result, the oxidizing agent may remove flammable gas accumulated in the battery module 100, thereby preventing thermal runaway in the battery module 100 and improving the stability of the battery module 100.

The material of the first case 110 may include, but not limited to, a durable and heat-resistant material, e.g., at least one of ABS, PC, PP, aluminum, and stainless steel.

The material of cover parts 111 respectively located within the plurality of openings OP of the first case 110 may include the same material as the first case 110.

When the temperature of the battery cell 10 rises and heat is released, the fire extinguishing medium 115 included in the fire extinguishing unit 130 may absorb the heat so that the first case 110 of the fire extinguishing unit 130 may not easily melt. However, a cover part 111 of the first case 110, which overlaps the coating layer 113, may be melted by the ignition agent and the oxidizing agent of the coating layer 113. Accordingly, by allowing the fire extinguishing medium 115 inside the fire extinguishing unit 130 to be released into the battery cell 10 through the openings OP, the temperature of the battery cell 10 or the battery module 100 may be lowered or fire in the battery cell 10 or the battery module 100 may be extinguished. That is, a portion of the first case 110 that does not overlap the coating layer 113 may not melt in advance before the thermal runaway of the battery cell 10 or the battery module 100, and a portion of the first case 110 that overlaps the coating layer 113 may melt in advance before the thermal runaway of the battery cell 10 or the battery module 100.

A thickness d₁ of the cover part 111 may be about 0.1 mm to about 2 mm. The thickness d₁ of the cover part 111 may be less than a thickness d₂ of the first case 110. In the case where the thickness d₁ of the cover part 111 is less than 0.1 mm, when even slight stress or heat is applied to the cover part 111 even at the normal operating temperature of the battery module 100, the cover part 111 may be lost and the fire extinguishing medium 115 stored inside the fire extinguishing unit 130 may be released, resulting in waste of materials.

In the case where the thickness d₁ of the cover part 111 is greater than 2 mm, when the temperature of the battery cell 10 increases, despite the ignition of the ignition agent of the cover part 111, time taken for the cover part 111 to melt may increase due to the large thickness d₁ of the cover part 111, which may delay the release of the fire extinguishing medium 115, and therefore, the thermal runaway of the battery cell 10 may not be suppressed in the early stage. In addition, when the case where the thickness d₁ of the cover part 111 is greater than 2 mm, the volume of the battery module 100 may increase so that the energy density (energy stored per unit volume) of the battery module 100 may decrease.

For example, the cover part 111, which is located in the opening OP and blocks the opening OP, may be circular. That is, the opening OP may be formed in a cylindrical shape. As a result, when the fire extinguishing medium 115 is fluid-dynamically discharged, the resistance between the fire extinguishing medium 115 and the first case 110 may be small so that the fire extinguishing medium 115 may flow uniformly and thus be efficiently sprayed.

For example, the cover part 111 that blocks the opening OP may have an oval shape. As described herein, the opening OP may be arranged to overlap the vent 13 of the battery cell 10. At this time, the cover part 111 may be arranged to cover the vent 13 and the periphery of the vent 13. Here, the periphery of the vent 13 may refer to a region having an area of about 5 % to about 20 % of the area of the vent 13. When the area of the periphery of the vent 13 is less than 5 % of the area of the vent 13, there is a risk that the cover part 111 may not completely cover the vent 13 when a tolerance occurs. When the area of the periphery of the vent 13 exceeds 20 % of the area of the vent 13, there is a risk that the area of the cover part 111 becomes large so that the cover part 111 on the vent 13 may overlap another cover part 111 adjacent thereto or waste of material may occur.

The injection amount of the fire extinguishing medium 115 stored in the fire extinguishing unit 130 may be proportional to the width of the opening OP. For example, when the opening OP is circular, a diameter W of the opening OP may be about 5 mm to about 100 mm. In the case where the diameter W of the opening OP is less than 5 mm, when the cover part 111 melts as the temperature of the battery cell 10 increases, the injection amount of the fire extinguishing medium 115 stored in the fire extinguishing unit 130 may be small, resulting in a low extinguishing effect on the battery cell 10.

In the case where the diameter W of the opening OP exceeds 100 mm, when the cover part 111 melts as the temperature of the battery cell 10 increases, the injection amount of the fire extinguishing medium 115 stored in the fire extinguishing unit 130 may be large, rapidly consuming the fire extinguishing medium 115, so that fire in battery cells 10 other than the battery cell 10 having increased temperature may not be extinguished.

When the opening OP is oval, the area of the opening OP may be about 20 mm² to about 8000 mm² for the same reasons as described herein.

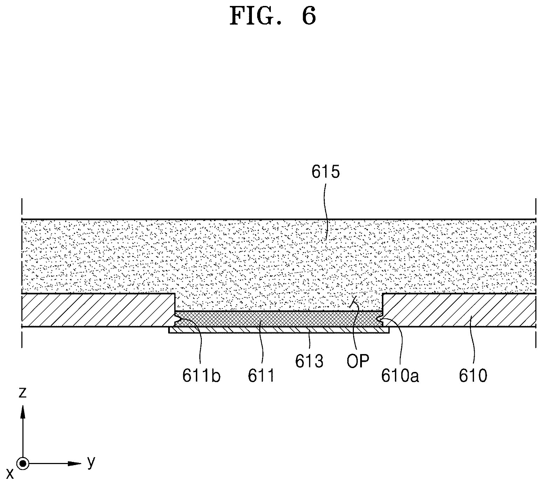

FIG. 6 is a cross-sectional view schematically illustrating another example of the cross-section along line A-A of the fire extinguishing unit 130 in FIG. 1.

Referring to FIG. 6, according to embodiments of the present invention, the fire extinguishing unit 130 may include a first case 610 and a second case that is combined with the first case 610 to accommodate a fire extinguishing medium 615 together with the first case 610.

The first case 610 may include a plurality of openings OP penetrating the first case 610 in the thickness direction (the z-direction) of the first case 610 and a cover part 611 positioned within each of the openings OP to block each opening OP.

In addition, a coating layer 613 covering an opening OP may be positioned on the bottom surface of the first case 610. The coating layer 613 may include resin and at least one of an ignition agent and an oxidizing agent. At this time, the coating layer 613 may include about 50 wt% to about 70 wt% of the resin, about 5 wt% to about 20 wt% of the ignition agent, and about 20 wt% to about 40 wt% of the oxidizing agent.

The first case 610 may include a fastening protrusion 610a protruding toward the cover part 611 in the opening OP, and the cover part 611 may include a fastening groove 611b corresponding to the fastening protrusion 610a.

When the first case 610 includes the fastening protrusion 610a protruding toward the cover part 611 in the opening OP and when the cover part 611 includes the fastening groove 611b corresponding to the fastening protrusion 610a, the fastening groove 611b may be fastened with the fastening protrusion 610a so that the cover part 611 may be firmly fastened within the first case 610 in the normal operating temperature range of a battery module. As a result, when an event does not occur, the cover part 611 may not fall off from the first case 610 and may thus prevent the fire extinguishing medium 615 stored inside the first case 610 from leaking out.

When the temperature of a battery cell increases, the ignition agent in the coating layer 613 may ignite and melt the cover part 611 of the first case 610 before thermal runaway occurs in the battery cell. Accordingly, the fire extinguishing medium 615 in the fire extinguishing unit 130 may be sprayed toward the battery cell through the openings OP, thereby lowering the temperature of the battery cell or extinguishing fire in the battery cell. In addition, the ignition agent in the coating layer 613 may ignite and provide energy to the oxidizing agent, which is included together with the ignition agent in the coating layer 613, so that the oxidizing agent may cause a chemical reaction with flammable gas accumulated in the battery module. As a result, the oxidizing agent may remove the flammable gas accumulated in the battery module, thereby preventing thermal runaway in the battery module in advance, and therefore, the stability of the battery module may be increased.

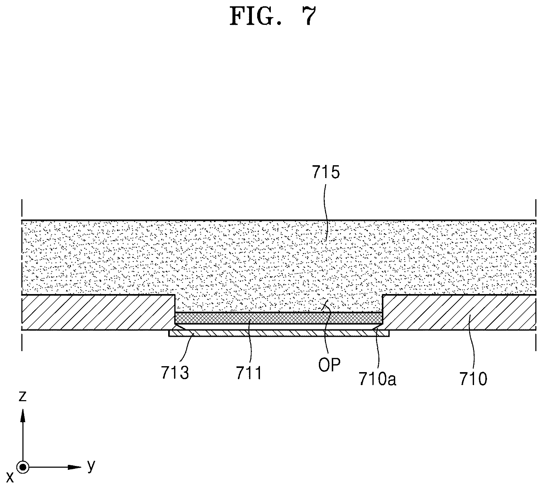

FIG. 7 is a cross-sectional view schematically illustrating another example of the cross-section along line A-A of the fire extinguishing unit 130 in FIG. 1.

Referring to FIG. 7, according to embodiments of the present invention, the fire extinguishing unit 130 may include a first case 710 and a second case that is combined with the first case 710 to accommodate a fire extinguishing medium 715 together with the first case 710.

The first case 710 may include a plurality of openings OP penetrating the first case 710 in the thickness direction (the z-direction) of the first case 710 and a cover part 711 positioned within each of the openings OP to block each opening OP.

In addition, a coating layer 713 covering an opening OP may be positioned on the bottom surface of the first case 710. The coating layer 713 may include resin and at least one of an ignition agent and an oxidizing agent. At this time, the coating layer 713 may include about 50 wt% to about 70 wt% of the resin, about 5 wt% to about 20 wt% of the ignition agent, and about 20 wt% to about 40 wt% of the oxidizing agent.

The first case 710 may include a support portion 710a, which is in the opening OP and obliquely protrudes toward the center of the opening OP. The cover part 711 may be positioned on the support portion 710a.

When the first case 710 includes the support portion 710a, which is in the opening OP and obliquely protrudes toward the center of the opening OP and when the cover part 711 is positioned on the support portion 710a, the support portion 710a may support the cover part 711 so that the cover part 711 may not fall off from the first case 710 in the normal operating temperature range of a battery module. As a result, when an event does not occur, the cover part 711 may not fall off from the first case 710 and may thus prevent the fire extinguishing medium 715 stored inside the first case 710 from leaking out.

When the temperature of a battery cell increases, the ignition agent in the coating layer 713 may ignite and melt the cover part 711 of the first case 710 before thermal runaway occurs in the battery cell. Accordingly, the fire extinguishing medium 715 in the fire extinguishing unit 130 may be sprayed toward the battery cell through the openings OP, thereby lowering the temperature of the battery cell or extinguishing fire in the battery cell. In addition, the ignition agent in the coating layer 713 may ignite and provide energy to the oxidizing agent, which is included together with the ignition agent in the coating layer 713, so that the oxidizing agent may cause a chemical reaction with flammable gas accumulated in the battery module. As a result, the oxidizing agent may remove the flammable gas accumulated in the battery module, thereby preventing thermal runaway in the battery module in advance, and therefore, the stability of the battery module may be increased.

According to embodiments of the present invention, a first case of a fire extinguishing unit of a battery module may include a plurality of openings penetrating the first case, cover parts respectively positioned within the openings, and a coating layer, which includes an ignition agent, an oxidizing agent, and resin and covers the openings, so that before thermal runaway of the battery module occurs, flammable gas may be removed and a fire extinguishing medium stored in the fire extinguishing unit may be sprayed, thereby preventing thermal runaway of the battery module in advance. As a result, the stability of the battery module may be increased.

However, the effects obtainable from the present invention are not limited to the effects described herein, and other technical effects not mentioned will be clearly understood by those skilled in the art from the description of the invention.

While the present invention has been described herein with reference to particular embodiments and drawings, the present invention is not limited to these embodiments. It is obvious that various changes and modifications may be made by one of ordinary skill in the art, to which the present invention pertains, within the scope of the technical idea of the present invention and the equivalent scope of the claims to be described herein.

## Claims

1. A battery module (100) comprising:
a plurality of battery cells (10);
an upper cover (140) covering the plurality of battery cells (10); and
a fire extinguishing unit (130) arranged between the upper cover (140) and the plurality of battery cells (10),
wherein the fire extinguishing unit (130) includes a first case (110, 610, 710) and a second case (120), which is combined with the first case (110, 610, 710) and accommodates a fire extinguishing medium (115, 615, 715) together with the first case (110, 610, 710),
the first case (110, 610, 710) includes a plurality of openings penetrating the first case (110, 610, 710) in a thickness direction of the first case (110, 610, 710) and a cover part (111, 611, 711) positioned within each of the plurality of openings to block each of the plurality of openings, and
a coating layer (113, 613, 713) is positioned on a bottom surface of the first case (110, 610, 710), covers the plurality of openings, and includes an ignition agent, an oxidizing agent, and a resin.

2. The battery module (100) according to claim 1, wherein
each of the plurality of battery cells (10) includes a vent (13), and
each of the plurality of openings overlaps the vent (13).

3. The battery module (100) according to claim 1 or 2, wherein
a thickness (d₁) of the cover part (111) is about 0.1 mm to about 2 mm.

4. The battery module (100) according to any of claims 1 to 3, wherein
a shape of each of the plurality of openings is a circle.

5. The battery module (100) according to claim 4, wherein
a diameter (W) of each of the plurality of openings is about 5 mm to about 100 mm.

6. The battery module (100) according to any of the preceding claims, wherein
the coating layer (113, 613, 713) includes about 50 wt% to about 70 wt% of the resin, about 5 wt% to about 20 wt% of the ignition agent, and about 20 wt% to about 40 wt% of the oxidizing agent.

7. The battery module (100) according to any of the preceding claims, wherein
a thickness (d₁) of the cover part (111) is less than a thickness (d₂) of the first case (110).

8. The battery module (100) according to any of the preceding claims, wherein
the first case (610) further includes a fastening protrusion (610a) protruding toward the cover part (611) in each of the plurality of openings, and
the cover part (611) includes a fastening groove (611b) corresponding to the fastening protrusion (610a).

9. The battery module (100) according to any of the preceding claims, wherein
the first case (710) further includes a support portion (710a) obliquely protruding in each of the plurality of openings toward a center of each of the plurality of openings, and
the cover part (711) is positioned on the support portion (710a).

10. The battery module (100) according to any of the preceding claims, wherein
the oxidizing agent includes at least one of potassium nitrate (KNO₃), sodium nitrate (NaNO₃), ammonium nitrate (NH₄NO₃), potassium perchlorate (KClO₄), sodium perchlorate (NaClO₄), ammonium perchlorate (NH₄ClO₄), and potassium permanganate (KMnO₄).

11. A battery module (100) comprising:
a plurality of battery cells (10) each including a vent (13); and
a fire extinguishing unit (130) arranged on the plurality of battery cells (10),
wherein the fire extinguishing unit (130) includes a first case (110, 610, 710) and a second case (120), which is combined with the first case (110, 610, 710) and accommodates a fire extinguishing medium (115, 615, 715) together with the first case (110, 610, 710),
the first case (110, 610, 710) includes a plurality of openings penetrating the first case (110, 610, 710) in a thickness direction of the first case (110, 610, 710) and a cover part (111, 611, 711) positioned within each of the plurality of openings to block each of the plurality of openings,
a coating layer (113, 613, 713) is positioned on a bottom surface of the first case (110, 610, 710), covers the plurality of openings, and includes an ignition agent, an oxidizing agent, and a resin, and
each of the plurality of openings overlaps the vent (13).

12. The battery module (100) according to claim 11, wherein
the coating layer (113, 613, 713) includes about 50 wt% to about 70 wt% of the resin, about 5 wt% to about 20 wt% of the ignition agent, and about 20 wt% to about 40 wt% of the oxidizing agent.

13. The battery module (100) according to claim 11 or 12, wherein
a thickness (d₁) of the cover part (111) is less than a thickness (d₂) of the first case (110).

14. The battery module (100) according to any of claims 11 to 13, wherein
a thickness (d₁) of the cover part (111) is about 0.1 mm to about 2 mm.

15. The battery module (100) according to any of claims 11 to 14, wherein
an area of the coating layer (113) is larger than an area of the plurality of openings.
